# EUROPEAN PATENT SPECIFICATION

(11) **EP 4 197 768 B1**
(45) Date of publication and mention of the grant of the patent: **11.02.2026**
(21) Application number: 21214902.5
(22) Date of filing: 15.12.2021
(51) Int. Cl.: B29D 30/00, B60C 23/04, B60C 23/20, B60C 19/00, G06K 19/07, G06K 19/077

(54) **RUBBER PRODUCT FOR MOVING APPLICATIONS WITH A SENSOR**
GUMMIPRODUKT FÜR BEWEGLICHE ANWENDUNGEN MIT EINEM SENSOR
PRODUIT EN CAOUTCHOUC POUR APPLICATIONS MOBILES AVEC UN CAPTEUR

(43) Date of publication of application: 21.06.2023
(73) Proprietor: Continental Reifen Deutschland GmbH, 30175 Hannover (DE)
(72) Inventor: STOIAN, Liviu Achim, 30165 Hannover (DE)
(74) Representative: Continental Corporation

(56) References cited:
- EP-A1- 3 135 508
- EP-A1- 3 578 392
- EP-A1- 3 581 473
- EP-A2- 0 689 950
- EP-A2- 1 356 957
- EP-A2- 1 743 781
- WO-A1-2004/074016
- WO-A2-2012/071198
- DE-A1- 102014 206 463
- DE-A1- 102018 215 314
- US-A1- 2005 221 704
- US-A1- 2015 075 693
- US-A1- 2020 182 660

## Description

The invention relates to a rubber product for moving applications with a sensor and a device with such a sensor. The invention further relates to a method of operating a rubber product, a use of such a sensor and a computer program product.

Rubber products for moving applications with a sensor are known for different applications. For example, tyre vehicles are known which have acceleration sensors or tyre pressure sensors to measure and output vehicle tyre conditions.

EP 0 689 950 A2 discloses a method of monitoring tires, which uses an active, self-powered programmable electronic device. The device is installed in or on the interior surface of a pneumatic tire or on a tire rim.

EP 3 578 392 A1 discloses a method of inserting an insert comprising electronic components to a tread of a tire.

EP 3 135 508 A1 discloses a tire equipped with a sensor module and a sensor patch.

The sensor patch is formed integrally with the inner liner of the tire by being vulcanized into the inner circumferential surface, and an accommodation space is formed in a region so that the sensor module can be fixed therein.

DE 10 2014 206 463 A1 discloses a sensor housing for mounting on an inside of a tire of a vehicle wheel. The sensor housing includes a base surface for securing the sensor housing in the inner chamber of the wheel, a receiving area having a recess for receiving a sensor, and a predetermined breaking point for breaking open the receiving area and thus for releasing the sensor from the receiving area

WO 2012/071198 A2 discloses a conveyor belt comprising a belt body, an energy-harvesting device disposed in or on the belt body, an energy-storage device disposed in or on the belt body and coupled to the energy- harvesting device to store energy harvested by the energy-harvesting device, and an electrical device disposed in or on the belt body and powered by energy stored in the energy-storage device.

US 2015/0075693 A1 discloses a method of mounting an object on a tire. The tire has a sidewall with a mounting portion configured to receive the object. The object is mounted on the mounting portion of the sidewall, such that the object is visible without extending outwardly beyond the mounting portion.

DE 10 2018 215 314 A1 discloses a method for fitting a vehicle tire with a sensor. The vehicle tire has a tread strip with a tread base and a void for inserting a sensor.

EP3581473A1 discloses an elastomer belt for transmitting a drive force in an agricultural machine. The elastomer belt comprises a base body, a running surface for transmitting the drive force to a mating running surface and a sensor element. An area of the elastomer belt assigned to a surface section of the elastomer belt is used as an attachment point for the sensor element.

Known rubber products for moving applications with a sensor are costly and have a limited information value about a variety of ambient values of the rubber product.

The object of the present invention is to provide a rubber product for moving applications with a sensor, a device with such a sensor and a method for operating the rubber product in such a way as well as a use of such a sensor and a computer program product that the disadvantages mentioned are overcome.

This object is achieved by a rubber product according to claim 1, a device with such a rubber product, a method, a use of a sensor and a computer program product according to the independent claims. The dependent claims relate to particularly useful further embodiments of the invention.

According to the invention, a rubber product for moving applications is provided with a sensor, wherein the sensor is enclosed in the rubber product and arranged at an outer surface of the rubber product and protrudes in partial regions from the outer surface of the rubber product. In particular, the sensor protrudes with an area of antennas and/or a sensor element into the environment and is configured to measure one or more ambient values The protruding of the sensor from the outer surface of the rubber product enables in a simple manner the measurement of ambient values which are environmental values. Enclosing most areas of the sensor in the rubber product protects the sensor from environmental values. A high sensitivity of the antennas as well as a particularly fast and accurate measurement of environmental values is achieved by protruding into the environment by the antennas and/or by the sensor elements.

Ambient values are values that can be measured with the sensor of the rubber product and can be values that affect the rubber product or environment parameters. Environment parameters are values that are not values of the rubber product but relate to the environment of the rubber product.

For example, an ambient temperature can be measured with high accuracy even if the rubber product has a temperature that differs from the environment. The temperature of the rubber product can be different to the ambient temperature due to a movement of the rubber product and can also be caused by heat conduction or heat radiation.

Furthermore, for example moisture in the environment, such as a water film, which comes into contact with the rubber product, can be detected quickly and easily with sensors protruding of from the outer surface of the rubber product.

A rubber product for moving applications is a rubber product which, according to its use, itself executes a movement by moving as a whole and/or by moving in partial areas. Such a rubber product is further understood to be a rubber product intended for applications in which the rubber product itself does not perform any movement but is in functional contact with moving components.

Preferably the sensor is an RFID sensor, which comprises a temperature sensor and/or a humidity sensor, wherein the sensor preferably combines a temperature sensor and a humidity sensor in one component. Designing a sensor as an RFID sensor allows a particularly cost-efficient design of a sensor that is still compact and resistant to a wide range of environmental conditions. Designing an RFID sensor as a temperature sensor or a humidity sensor is advantageous for a variety of rubber product for moving applications, as these environmental values are particularly relevant. A combination of a temperature sensor and a humidity sensor in one component enables a particularly cost-effective and compact sensor design.

In another advantageous embodiment the sensor has a temperature sensor and a second temperature sensor, wherein the second temperature sensor is completely enclosed by the rubber product. The provision of a second sensor, completely enclosed by the rubber product, enables a particularly accurate determination of environmental conditions. For example, the second sensor can measure the temperature of the rubber product. A comparison of the measured temperature values of the first temperature sensor with the measured temperature values of the second temperature sensor enables an estimation of the temperature difference between the rubber product and the ambient temperature. In this way, for example, a measurement error concerning the ambient temperature, which is caused by the proximity of the sensor element of the temperature sensor to the rubber product, can be determined and compensated.

Furthermore, ambient values can be determined. For example, a temperature of the rubber product that deviates excessively from the ambient temperature can be determined, which allows conclusions to be drawn about the condition of the rubber product or components that are connected to the rubber product.

Preferably the sensor is located in a thread or a groove of the rubber product, wherein the thread or groove in particular is part of a vehicle tyre or of a conveyor belt. Positioning the sensor in a thread or groove of the rubber product enables a particularly well protected mounting of the sensor, especially against mechanical effects.

In another advantageous embodiment the sensor has been joined to the rubber product due to vulcanization of the rubber product or has been attached to the rubber product, especially by gluing or sewing. Joining the sensor due to vulcanization of the rubber product enables a particularly strong and reliable connection between the sensor and the rubber product. Attaching the sensor to the rubber product makes it possible to connect the sensor to the rubber product after vulcanisation of the rubber product. The sensor does not have to endure the conditions prevailing during vulcanisation. Gluing or sewing has proven to be particularly advantageous, as this enables a secure and cost-effective connection.

Preferably the humidity sensor emits exactly one signal when a limit humidity is exceeded and emits exactly one second signal when the humidity falls below the limit humidity. The output of exactly one signal at low humidity and exactly one further signal at high humidity enables a particularly simple evaluation of the measurement result for applications where a differentiation into the cases mentioned is sufficient. The output of no signal by the humidity sensor is understood as an output "no signal".

In another advantageous embodiment the humidity sensor has an interrupted RFID antenna coil and the antenna coil can be conductively connected by a water film. The presence of a water film leads to a conductive antenna coil and an active RFID sensor that emits a signal. If there is no film of moisture on the antenna coil, the RFID sensor does not emit a signal. This enables a particularly simple design of an RFID sensor for measuring moisture.

Preferably the rubber product is suitable for conveying or transport purposes and in particular is a conveyor belt, a drive belt or a vehicle tyre. Rubber products for moving applications with a sensor are often used in the field of conveying or transport and are particularly advantageous in applications as a conveyor belt, a drive belt or a vehicle tyre.

Disclosed is a device with a rubber product according to the invention. The device is comprising the rubber product which is adapted to determine process parameters in cooperation with a receiving unit. The receiving unit, which is preferably located in the vicinity of the rubber product, is comprising a receiver for receiving the sensor data transmitted by the rubber product and a processor unit for determining the process parameters. Furthermore, the receiving unit comprises an output unit for outputting the process parameters to an actuator. The process parameters can be output directly to an actuator or indirectly via a computer unit that controls the actuator. The receiving unit preferably comprises a transmitting unit for transmitting signals to the rubber product. The transmitting unit can, for example, send a signal to an RFID sensor to supply it with energy.

Disclosed is a method for determining ambient values with a rubber product according to the invention. A sensor of the rubber product acquires sensor data, processes the acquired sensor data and sends it to a receiving unit, wherein the receiving unit receives the sensor data, processes it and regulates parameters and/or issues a warning message. Thus, the device can measure and transmit ambient values by means of the rubber product, receives and processes them with the receiving unit and puts out process parameters to control a process or issues a warning message.

An advantageous method influences the parameters of a control cycle, in particular a vehicle control cycle. Preferably the vehicle control cycle relates to a control of the drive power or the deceleration power of a vehicle tyre or that the parameters cause a warning message to be released. Control cycles are especially advantageous for vehicles because control cycle of vehicles often depend from ambient values, so the safety for vehicles can increase especially by lower temperatures or wet surfaces. Hereby the drive power and the deceleration power of a vehicle tyre is most important.

Known temperature sensors are arranged on vehicles at a considerable distance from the road surface, where there is regularly a relevant temperature difference between the temperature in the air at a greater distance from the road surface and the temperature of the road surface or the temperature of the air in the near the road surface.

Preferably a temperature difference between temperature sensors of one tyre and/or between temperature sensors of different tyres of a vehicle is determined, whereby a warning message is output and/or a process parameter is influenced when a threshold temperature difference is exceeded. By issuing a warning message and/or influencing a process parameter by exceeding a threshold temperature difference, a defect in a tyre or a component adjacent to the wheel of the tyre can be detected. The defect leads to an increased or a decreased transfer of forces from the tyre to the ground, which causes the temperature change. A defect can thus be easily detected and consequential damage can be avoided by issuing a warning message and/or by influencing a process parameter.

Disclosed is a use of a sensor in a rubber product according to the invention. The sensor is arranged at an outer surface of the rubber product and protrudes in partial areas from the outer surface of the rubber product. Through this use of the sensor the information value about a variety of ambient values is increased.

Disclosed is a computer program product for determining an ambient value of a rubber product for moving applications with a sensor, comprising instructions which, when the program is executed by at least one processing unit, cause the processing unit to execute the method according to the invention.

The invention allows for numerous embodiments. To further illustrate its basic principle, two of them are shown in the drawings and are described below. These show in
- Fig. 1: a vehicle tyre with a temperature sensor and a humidity sensor;
- Fig. 2: a printed RFID sensor with a humidity detection area.

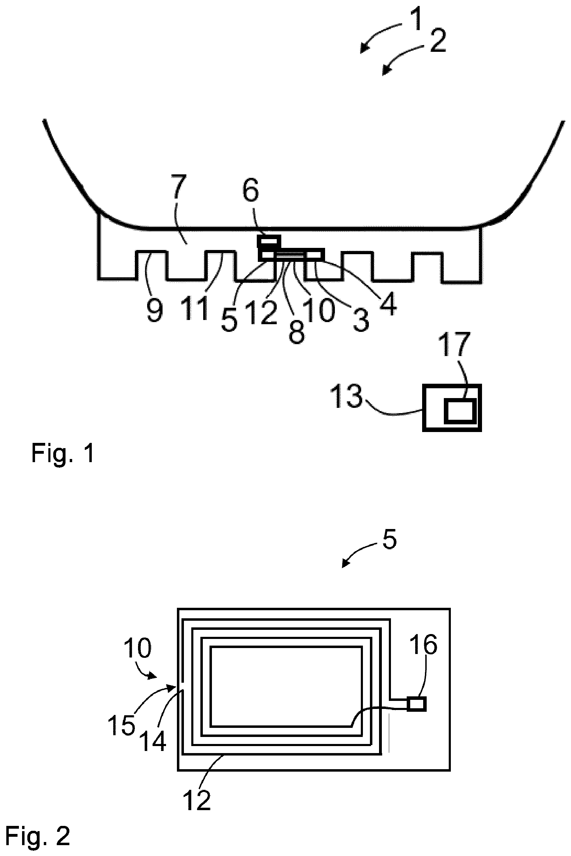

Figure 1 shows a rubber product 1 in the form of a vehicle tyre 2 with a sensor 3 in the form of temperature sensor 4 and a humidity sensor 5. Furthermore, the sensor 3 has a second temperature sensor 6, which is located in the tread 7 of the vehicle tyre 2. The second temperature sensor 6 measures the temperature prevailing in the tread 7 of the vehicle tyre 2, i.e. the vehicle tyre 2 temperature.

The sensor 3 is a RFID sensor with antennas 8. The temperature sensor 4 and a humidity sensor 5 are located in a groove 9 of the vehicle tyre 2. The antennas 8 of the humidity sensor 5 and the temperature measuring area of the temperature sensor 4 are protruding in partial areas 10 from the outer surface 11 of the vehicle tyre 2.

The temperature sensor 4 measures the temperature outside the vehicle tyre 2, i.e. the ambient temperature close to the road surface. The humidity sensor 5 measures the humidity outside of the vehicle tyre 2, i.e. the humidity of the road surface.

The antenna coil 12 of the humidity sensor 5 is interrupted in the partial area 10, which is shown in detail in Figure 2. If the interruption 15 is not bridged, the humidity sensor 5 does not send out a signal. The interruption 15 of the antenna coil 12 is open to the environment so that a film of moisture from a road surface can bridge the interruption 15. By bridging the interruption 15 of the antenna coil 12, the antenna coil 12 becomes electrically conductive and the humidity sensor 5 emits a signal.

The signal from the humidity sensor 5, the temperature sensor 4 and the second temperature sensor 6 are processed and sent to a receiving unit 13, which is arranged at the vehicle. The receiving unit 13 receives and processes the sensor data. The receiving unit 13 regulates parameters and issues warning messages.

The sensor 3 measures values such as temperature and humidity and processes these measured values before the sensor 3 sends the measured values to a receiving unit 13. The receiving unit 13 receives the measured values from the sensor 3. The receiving unit 13 processes the measured values with a processing unit 17 and regulates parameters based on the processed measured values. The parameters are sent to a traction control system and reduce the traction power to vehicle tyres 2 depending on further parameters, if the determined temperature is below a threshold value. Furthermore, the power is reduced if the humidity sensor 5 detects moisture.

If a comparison of the temperature sensor 4 and the second temperature sensor 6 or the second temperature sensor 6 of the vehicle tyre 2 with a further second temperature sensor 6 of a further vehicle tyre 2 determines a temperature difference that is above a threshold value, a warning message is issued. An excessively increased temperature of a vehicle tyre 2 carries a risk of a vehicle tyre 2 defect and can be caused by a vehicle defect such as a defective wheel bearing and consequently an increased rolling resistance with increased power transmission of the vehicle tyre 2 to the road.

Figure 2 shows a printed RFID sensor with a humidity detection area 14, which is positioned in the partial areas 10. The humidity detection area 14 is realised by an Interruption 15 of the antenna coil 12. Is the Interruption 15 dry no signal is emitted by the humidity sensor 5. If the Interruption 15 is bridged by a film of moisture from the environment the antenna coil 12 becomes electrically conductive and the antenna coil 12 supplies the microchip 16 with energy. The humidity sensor 5 emits a signal.

### LIST OF REFERENCE NUMBERS

- 1: rubber product
- 2: vehicle tyre
- 3: sensor
- 4: temperature sensor
- 5: humidity sensor

- 6: second temperature sensor
- 7: tread
- 8: antenna
- 9: groove
- 10: partial area

- 11: outer surface
- 12: antenna coil
- 13: receiving unit
- 14: humidity detection area
- 15: interruption

- 16: microchip
- 17: processing unit

## Claims

1. Rubber product (1) for moving applications with a sensor (3), wherein the sensor (3) is enclosed in the rubber product (1) and arranged at an outer surface (11) of the rubber product (1) and protrudes in partial areas (10) from the outer surface (11) of the rubber product (1), **characterized in that** the sensor (3) protrudes with an area of antennas (8) and/or a sensor element into the environment and is configured to measure one or more ambient values.

2. Rubber product (1) according to claim 1, wherein the sensor (3), which is preferably an RFID sensor, is a temperature sensor (4) and/or a humidity sensor (5), wherein the sensor (3) preferably combines a temperature sensor (4) and a humidity sensor (5) in one component.

3. Rubber product (1) according to claim 1 or 2, wherein the sensor (3) has a temperature sensor (4) and a second temperature sensor (6), wherein the second temperature sensor (6) is completely enclosed by the rubber product (1).

4. Rubber product (1) according to one of the preceding claims, wherein t the sensor (3) is located in a thread or a groove (9) of the rubber product (1), wherein the thread or groove (9) in particular is part of a vehicle tyre (2) or of a conveyor belt.

5. Rubber product (1) according to one of the preceding claims, wherein the sensor (3) has been vulcanized to the rubber product (1) or has been attached to the rubber product (1), especially by gluing or sewing.

6. Rubber product (1) according to claim 2, wherein the humidity sensor (5) emits exactly one signal when a limit humidity is exceeded and emits exactly one second signal when the humidity is below the limit humidity.

7. Rubber product (1) according to claim 2 or 6, wherein the humidity sensor (5) has an interrupted RFID antenna coil (12) and the antenna coil (12) can be conductively connected by a water film.

8. Rubber product (1) according to one of the preceding claims, wherein the rubber product (1) is suitable for conveying or transport purposes and in particular is a conveyor belt, a drive belt or a vehicle tyre (2).

9. Device comprising a rubber product (1) according to one of claims 1 to 8, **characterized in that** the rubber product (1) is adapted to determine process parameters in cooperation with a receiving unit (13), the receiving unit (13) comprising a receiver for receiving the sensor data transmitted by the rubber product (1), a processor unit for determining the process parameters and an output unit for outputting the process parameters to an actuator, wherein the receiving unit (13) preferably comprises a transmitting unit for transmitting signals to the rubber product (1).

10. Method for determining ambient values with a rubber product (1) according to one of claims 1 to 8, **characterized in that** a sensor (3) acquires sensor data, processes the acquired sensor data and sends the acquired sensor data to a receiving unit (13), wherein the receiving unit (13) receives the acquired sensor data, processes acquired sensor data and regulates parameters and/or issues a warning message.

11. Method according to claim 10, wherein the parameters influence a control cycle, in particular a vehicle control cycle, wherein the vehicle control cycle relates in particular to a control of the drive power or the deceleration power of a vehicle tyre (2) or that the parameters cause a warning message to be output.

12. Method according to claim 10 or 11, wherein a temperature difference between the temperature sensors (3) and the second temperature sensor (6) of one vehicle tyre (2) and/or between the temperature sensors (3, 6) of different vehicle tyres (2) of a vehicle is determined, wherein a warning message is output and/or a process parameter is influenced when the temperature difference exceeds a threshold temperature difference.

13. Use of a sensor (3) in a rubber product (1) according to one of claims 1 to 8, wherein the sensor (3) is enclosed in the rubber product (1) and arranged at an outer surface (11) of the rubber product (1) and protrudes in partial areas (10) from the outer surface (11) of the rubber product (1), **characterized in that** the sensor (3) protrudes with an area of antennas (8) and/or a sensor element into the environment, and **in that** the sensor (3) is configured to measure one or more ambient values.

14. A computer program product for determining an ambient value of a rubber product (1) for moving applications with a sensor (3), comprising instructions which, when the program is executed by at least one processing unit (17), cause the processing unit (17) to execute the method according to one of claims 10 to 12.

## Patentansprüche

1. Gummiprodukt (1) für bewegliche Anwendungen mit einem Sensor (3), wobei der Sensor (3) in dem Gummiprodukt (1) eingeschlossen und an einer Außenfläche (11) des Gummiprodukts (1) angeordnet ist und in Teilbereichen (10) von der Außenfläche (11) des Gummiprodukts (1) vorsteht, **dadurch gekennzeichnet, dass** der Sensor (3) mit einem Bereich von Antennen (8) und/oder einem Sensorelement in die Umgebung vorsteht und zum Messen eines oder mehrerer Umgebungswerte ausgebildet ist.

2. Gummiprodukt (1) nach Anspruch 1, wobei der Sensor (3), der vorzugsweise ein RFID-Sensor ist, ein Temperatursensor (4) und/oder ein Feuchtigkeitssensor (5) ist, wobei der Sensor (3) vorzugsweise einen Temperatursensor (4) und einen Feuchtigkeitssensor (5) in einer Komponente kombiniert.

3. Gummiprodukt (1) nach Anspruch 1 oder 2, wobei der Sensor (3) einen Temperatursensor (4) und einen zweiten Temperatursensor (6) aufweist, wobei der zweite Temperatursensor (6) von dem Gummiprodukt (1) vollständig eingeschlossen ist.

4. Gummiprodukt (1) nach einem der vorhergehenden Ansprüche, wobei sich der Sensor (3) in einer Lauffläche oder einer Rille (9) des Gummiprodukts (1) befindet, wobei das Gewinde oder die Rille (9) insbesondere Teil eines Fahrzeugreifens (2) oder eines Förderbandes ist.

5. Gummiprodukt (1) nach einem der vorhergehenden Ansprüche, wobei der Sensor (3) auf das Gummiprodukt (1) aufvulkanisiert oder an dem Gummiprodukt (1) befestigt worden ist, insbesondere durch Kleben oder Nähen.

6. Gummiprodukt (1) nach Anspruch 2, wobei der Feuchtigkeitssensor (5) bei Überschreiten einer Grenzfeuchtigkeit genau ein Signal aussendet und bei Unterschreiten der Grenzfeuchtigkeit genau ein zweites Signal aussendet.

7. Gummiprodukt (1) nach Anspruch 2 oder 6, wobei der Feuchtigkeitssensor (5) eine unterbrochene RFID-Antennenspule (12) aufweist und die Antennenspule (12) durch einen Wasserfilm leitend verbunden werden kann.

8. Gummiprodukt (1) nach einem der vorhergehenden Ansprüche, wobei das Gummiprodukt (1) für Förder- oder Transportzwecke geeignet ist und insbesondere ein Förderband, ein Antriebsriemen oder ein Fahrzeugreifen (2) ist.

9. Vorrichtung, die ein Gummiprodukt (1) nach einem der Ansprüche 1 bis 8 aufweist, **dadurch gekennzeichnet, dass** das Gummiprodukt (1) dazu ausgelegt ist, Prozessparameter in Zusammenwirkung mit einer Empfangseinheit (13) zu bestimmen, wobei die Empfangseinheit (13) einen Empfänger zum Empfangen der von dem Gummiprodukt (1) übertragenen Sensordaten, eine Prozessoreinheit zum Bestimmen der Prozessparameter und eine Ausgabeeinheit zum Ausgeben der Prozessparameter an einen Aktor aufweist, wobei die Empfangseinheit (13) vorzugsweise eine Übertragungseinheit zum Übertragen von Signalen an das Gummiprodukt (1) aufweist.

10. Verfahren zum Bestimmen von Umgebungswerten mit einem Gummiprodukt (1) nach einem der Ansprüche 1 bis 8, **dadurch gekennzeichnet, dass** ein Sensor (3) Sensordaten erfasst, die erfassten Sensordaten verarbeitet und die erfassten Sensordaten an eine Empfangseinheit (13) sendet, wobei die Empfangseinheit (13) die erfassten Sensordaten empfängt, erfasste Sensordaten verarbeitet und Parameter regelt und/oder eine Warnmeldung ausgibt.

11. Verfahren nach Anspruch 10, wobei die Parameter einen Steuerzyklus, insbesondere einen Fahrzeugsteuerzyklus, beeinflussen, wobei sich der Fahrzeugsteuerzyklus insbesondere auf eine Steuerung der Antriebsleistung oder der Verzögerungsleistung eines Fahrzeugreifens (2) bezieht oder die Parameter bewirken, dass eine Warnmeldung ausgegeben wird.

12. Verfahren nach Anspruch 10 oder 11, wobei eine Temperaturdifferenz zwischen den Temperatursensoren (3) und dem zweiten Temperatursensor (6) eines Fahrzeugreifens (2) und/oder zwischen den Temperatursensoren (3, 6) verschiedener Fahrzeugreifen (2) eines Fahrzeugs bestimmt wird, wobei eine Warnmeldung ausgegeben wird und/oder ein Prozessparameter beeinflusst wird, wenn die Temperaturdifferenz eine Schwellentemperaturdifferenz überschreitet.

13. Verwendung eines Sensors (3) in einem Gummiprodukt (1) nach einem der Ansprüche 1 bis 8, wobei der Sensor (3) in dem Gummiprodukt (1) eingeschlossen und an einer Außenfläche (11) des Gummiprodukts (1) angeordnet ist und in Teilbereichen (10) von der Außenfläche (11) des Gummiprodukts (1) vorsteht, **dadurch gekennzeichnet, dass** der Sensor (3) mit einem Bereich von Antennen (8) und/oder einem Sensorelement in die Umgebung vorsteht und dass der Sensor (3) zum Messen eines oder mehrerer Umgebungswerte ausgebildet ist.

14. Computerprogrammprodukt zum Bestimmen eines Umgebungswerts eines Gummiprodukts (1) für bewegliche Anwendungen mit einem Sensor (3), das Anweisungen aufweist, die, wenn das Programm durch mindestens eine Verarbeitungseinheit (17) ausgeführt wird, bewirken, dass die Verarbeitungseinheit (17) das Verfahren nach einem der Ansprüche 10 bis 12 ausführt.

## Revendications

1. Produit en caoutchouc (1) pour applications mobiles avec un capteur (3), le capteur (3) étant enfermé dans le produit en caoutchouc (1) et disposé sur une surface extérieure (11) du produit en caoutchouc (1) et dépassant dans des zones partielles (10) de la surface extérieure (11) du produit en caoutchouc (1), **caractérisé en ce que** le capteur (3) dépasse d'une surface d'antennes (8) et/ou d'un élément de capteur dans l'environnement et est configuré pour mesurer une ou plusieurs valeurs ambiantes.

2. Produit en caoutchouc (1) selon la revendication 1, dans lequel le capteur (3), qui est de préférence un capteur RFID, est un capteur de température (4) et/ou un capteur d'humidité (5), le capteur (3) combinant de préférence un capteur de température (4) et un capteur d'humidité (5) en un seul composant.

3. Produit en caoutchouc (1) selon la revendication 1 ou 2, dans lequel le capteur (3) possède un capteur de température (4) et un second capteur de température (6), le second capteur de température (6) étant complètement entouré par le produit en caoutchouc (1).

4. Produit en caoutchouc (1) selon l'une des revendications précédentes, dans lequel le capteur (3) se trouve dans une bande de roulement ou une rainure (9) du produit en caoutchouc (1), le filet ou la rainure (9) faisant partie en particulier d'un pneu de véhicule (2) ou d'une bande transporteuse.

5. Produit en caoutchouc (1) selon l'une des revendications précédentes, dans lequel le capteur (3) a été vulcanisé sur le produit en caoutchouc (1) ou a été fixé sur le produit en caoutchouc (1), en particulier par collage ou couture.

6. Produit en caoutchouc (1) selon la revendication 2, dans lequel le capteur d'humidité (5) émet exactement un signal lorsqu'une limite d'humidité est dépassée et émet exactement un second signal lorsque l'humidité est inférieure à la limite d'humidité.

7. Produit en caoutchouc (1) selon la revendication 2 ou 6, dans lequel le capteur d'humidité (5) présente une bobine d'antenne RFID interrompue (12) et la bobine d'antenne (12) peut être connectée de manière conductrice par un film d'eau.

8. Produit en caoutchouc (1) selon l'une des revendications précédentes, dans lequel le produit en caoutchouc (1) est approprié pour le transport et est en particulier une bande transporteuse, une bande d'entraînement ou un pneu de véhicule (2).

9. Dispositif comprenant un produit en caoutchouc (1) selon l'une des revendications 1 à 8, **caractérisé en ce que** le produit en caoutchouc (1) est adapté pour déterminer des paramètres de processus en coopération avec une unité de réception (13), l'unité de réception (13) comprenant un récepteur pour recevoir les données de capteur transmises par le produit en caoutchouc (1), une unité de traitement pour déterminer les paramètres de processus et une unité de sortie pour délivrer les paramètres de processus à un actionneur, l'unité de réception (13) comprenant de préférence une unité de transmission pour transmettre des signaux au produit en caoutchouc (1).

10. Procédé de détermination de valeurs ambiantes avec un produit en caoutchouc (1) selon l'une des revendications 1 à 8, **caractérisé en ce qu'**un capteur (3) acquière des données de capteur, traite les données de capteur acquises et envoie les données de capteur acquises à une unité de réception (13), l'unité de réception (13) recevant les données de capteur acquises, traitant les données de capteur acquises et régulant des paramètres et/ou émettant un message d'avertissement.

11. Procédé selon la revendication 10, dans lequel les paramètres influencent un cycle de commande, en particulier un cycle de commande de véhicule, le cycle de commande de véhicule se rapportant en particulier à une commande de la puissance motrice ou de la puissance de décélération d'un pneu de véhicule (2) ou les paramètres provoquent la sortie d'un message d'avertissement.

12. Procédé selon la revendication 10 ou 11, dans lequel on détermine une différence de température entre les capteurs de température (3) et le second capteur de température (6) d'un pneu de véhicule (2) et/ou entre les capteurs de température (3, 6) de différents pneus de véhicule (2) d'un véhicule, un message d'avertissement étant délivré et/ou un paramètre de processus étant influencé lorsque la différence de température dépasse une différence de température seuil.

13. Utilisation d'un capteur (3) dans un produit en caoutchouc (1) selon l'une des revendications 1 à 8, dans laquelle le capteur (3) est enfermé dans le produit en caoutchouc (1) et disposé sur une surface extérieure (11) du produit en caoutchouc (1) et dépasse dans des zones partielles (10) de la surface extérieure (11) du produit en caoutchouc (1), **caractérisée en ce que** le capteur (3) dépasse d'une surface d'antennes (8) et/ou d'un élément de capteur dans l'environnement, et **en ce que** le capteur (3) est configuré pour mesurer une ou plusieurs valeurs ambiantes.

14. Produit de programme informatique pour déterminer une valeur ambiante d'un produit en caoutchouc (1) pour des applications mobiles avec un capteur (3), comprenant des instructions qui, lorsque le programme est exécuté par au moins une unité de traitement (17), amènent l'unité de traitement (17) à exécuter le procédé selon l'une des revendications 10 à 12.
